# EUROPEAN PATENT APPLICATION

(11) **EP 1 956 846 A1**
(43) Date of publication of application: **13.08.2008**
(21) Application number: 07113723.6
(22) Date of filing: 02.08.2007
(51) Int. Cl.: H04N 7/24

(54) **Broadcast receiving apparatus for receiving broadcast signal having reception area information and control method thereof**

(30) Priority: 29.09.2006 KR 20060096255
(71) Applicant: Samsung Electronics Co., Ltd., Suwon-si, Gyeonggi-do 442-742 (KR)
(72) Inventor: Lee, Kyung-hwan, Gyeonggi-do (KR)
(74) Representative: Walaski, Jan Filip

(57) **Abstract**

A broadcast receiving apparatus and a control method thereof are provided. The broadcast receiving apparatus comprises a signal receiver which receives a broadcast signal; a demultiplexer which extracts predetermined additional information from the broadcast signal; a storage part which stores area setting information corresponding to area information of a reception area; setting means which performs a basic setting operation to process the broadcast signal; and a controller which controls the setter to perform the basic setting operation based on the area setting information stored in the storage part, corresponding to the area information if the area information is included in the additional information of the broadcast signal received through the signal receiver when power is supplied.

## Description

The present invention relates to a broadcast receiving apparatus and a control method thereof, particularly but not exclusively to a broadcast receiving apparatus which receives a broadcast signal having additional information, and a control method thereof.

In broadcast receivers such as a television (TV) or a set-top box, basic information including an audio language, an on screen display (OSD) language, channel scan settings and time settings according to the reception area of the receiver is set at an initial set-up stage. In particular, a user selects respective functions from menus for setting the basic information after supplying power to the receiver.

A related art broadcast receiver requires a user to select many options to set such basic information, thereby causing inconvenience.

Further, in the related art broadcast receiver, a target country is designated at the time of production and the OSD menus are also set according to language and time of the target country. Thus, when the target country is changed to another country which uses a different language and is in a different time zone, the language and/or time of the preset OSD menu should be also changed prior to sale of the broadcast receiver. Otherwise, users may be required to change the language themselves, for instance using OSD menus presented in a foreign language.

The present invention provides a broadcast receiving apparatus which automatically sets a country, language and time setting corresponding to the reception area of the apparatus using an area code included in a broadcast signal received when power is initially supplied, and a control method thereof.

According to an aspect of the present invention, there is provided a broadcast receiving apparatus, comprising a signal receiver which receives a broadcast signal; a demultiplexer which extracts predetermined additional information from the broadcast signal; a storage part which stores area setting information corresponding to area information of a reception area; a setter which performs a basic setting operation to process the broadcast signal; and a controller which controls the setter to perform the basic setting operation based on the area setting information stored in the storage part, corresponding to the area information if the area information is included in the additional information of the broadcast signal received through the signal receiver when power is supplied.

The controller may determine whether the area information is included in the additional information of the received broadcast signal if power is supplied and an automatic setting function is selected.

The area setting information may comprise at least one of a language font corresponding to a language of the reception area, time, a frequency band and channel information.

The broadcast receiving apparatus may further comprise a user selection part, wherein the controller controls the setter to perform the basic setting operation based on a setting command input through the user selection part if the automatic setting function is not selected.

The controller may control the setter to perform the basic setting operation based on the setting command input through the user selection part if the area information is not included in the additional information.

According to another aspect of the present invention, there is provided a method of controlling a broadcast receiving apparatus, comprising receiving a broadcast signal when power is supplied; extracting additional information from the received broadcast signal; determining whether area information is included in the extracted additional information; and performing a basic setting operation to process the broadcast signal based on area setting information corresponding to the area information, the area setting information being stored corresponding to the area information of the reception area.

The method may further comprise determining whether an automatic setting function is selected if power is supplied.

The area setting information may comprise at least one of a language font corresponding to a language of the reception area, time, a frequency band and channel information.

The method may further comprise performing the basic setting operation based on a setting command from a user if the automatic setting function is not selected.

The method may further comprise performing the basic setting operation based on the setting command from a user if the area information is not included in the additional information.

Embodiments of the invention will now be described, by way of example, with reference to the accompanying drawings, in which:
Figure 1 is a control block diagram of a broadcast receiving apparatus according to an exemplary embodiment of the present invention;
Figure 2 is a control flowchart of a broadcast receiving apparatus according to an exemplary embodiment of the present invention; and
Figure 3 is a control flowchart of a broadcast receiving apparatus according to another exemplary embodiment of the present invention.

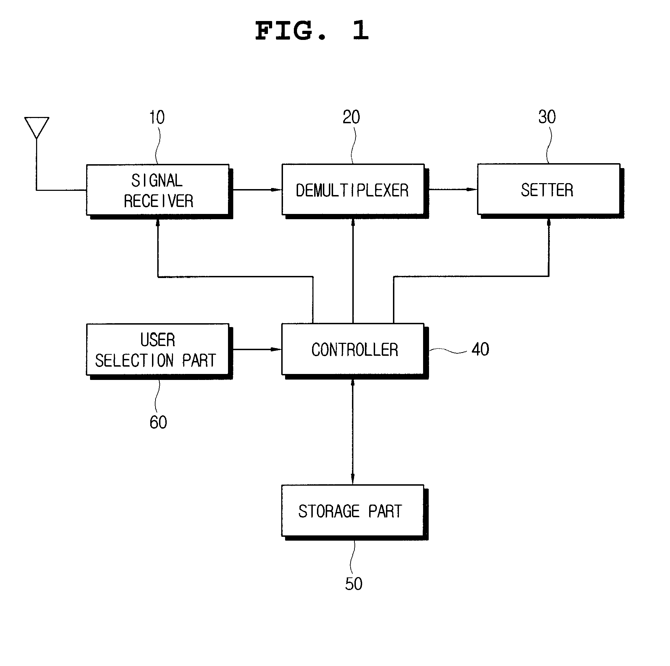

The present invention is applicable to broadcast receivers such as set-top boxes for receiving digital broadcasts or digital broadcast receivers such as digital TVs. As shown in Figure 1, a broadcast receiving apparatus according to an exemplary embodiment of the present invention comprises a signal receiver 10, a demultiplexer 20, a setter 30, a storage part 50 and a controller 40 which controls the foregoing elements.

The signal receiver 10 receives a broadcast signal, for instance via an aerial, and may, for instance, comprise a tuner. The signal receiver 10 tunes a channel selected by a user according to control signals received from the controller 40 and receives a broadcast signal according thereto.

The broadcast signal according to the present invention comprises a video signal, an audio signal and additional information and may be encoded and received as a transport stream in the Moving Picture Experts Group 2 (MPEG-2) format.
Here, the additional information may comprise Service Information (SI) of the Transport Stream.

The demultiplexer 20 demultiplexes a stream of a digital broadcast signal received through the broadcast channel and divides it into audio, video and data streams to be output. The demultiplexer 20 parses the data stream to obtain the Service Information.

The setter 30, also referred to as a receiver configuration unit, performs a basic setting operation of the broadcast receiving apparatus according to control signals received from the controller 40. The setter 30 may comprise a timer, an OSD generator and a memory.

The storage part 50, also referred to as memory, stores a plurality of basic settings corresponding to area information or operating region information when the broadcast receiving apparatus is manufactured. For example, the area information can comprise a country code included in the additional information of the broadcast signal. The storage part 50 may store information such as a language, time and a frequency band according to the country code.

For example, the storage part 50 stores character set and/or font data corresponding to one or more languages depending on the country code. The storage part 50 sends the character set and/or font data corresponding to the language set by the setter 30 to a signal processor (not shown).

The controller 40 uses a parsing result of the transport stream (TS) extracted by the demultiplexer 20 to determine where the broadcast receiving apparatus according to the present invention is installed.

For example, the controller 40 controls the signal receiver 10 to scan a receivable channel when power is initially supplied to the broadcast receiving apparatus, and may parse the TS from the broadcast signal of the initially-received channel to determine the SI of the additional information.

If the SI contains the country code, the controller 40 controls the setter 30 to perform the basic setting operation corresponding to area setting information of the country code stored in the storage part 50. That is, the controller 40 controls the setter 30 to set a language to the language of the reception area of the broadcast signal according to the derived area code based on the settings stored in the storage part 50, to automatically scan the received plurality of broadcast channels and to perform an automatic time setting operation.

When the setter 30 starts performing an operation to provide the OSD data, particularly the OSD menu, the controller 40 determines whether the setting language exists based on a value of the stored country code.

For example, if the broadcast receiving apparatus according to the present invention comprises a terrestrial digital TV which is used in Europe, the controller 40 checks the country code in the SI derived from an initially-tuned channel among channels with UHF 8 MHz band. For example, if the country code is 100, French country code, the controller 40 selects the area setting information corresponding to the country code 100.

The storage part 50 may store French, the language corresponding to the country code 100, and the currently-used frequency band.

If there exists character set or font data corresponding to French, the determined language, the controller 40 controls the setter 30 to set the font data or character set data as French as a basic language and stores it in a memory (not shown). An OSD generator (not shown) generates OSD data by using the font or character set data stored in the memory.

The controller 40 extracts time data table (TDT) information corresponding to the country code among the derived service information, and controls the setter 30 to perform a predetermined automatic time setting operation to automatically set the current time of the timer.

The controller 40 may automatically tune a channel according to a channel frequency corresponding to the country code, and control the setter 30 to store a tuned channel list in the channel memory.

The broadcast receiving apparatus according to the present invention may further comprise a user selection part 60.

The user selection part 60 is provided to enable a user to select an automatic setting function and the basic settings. The user selection part 60 may comprise a remote controller or one or more buttons provided in the broadcast receiving apparatus.

If the country code does not exist in the SI extracted through the demultiplexer 20, the controller 40 controls the setter 30 to perform the basic setting operation upon receipt of a user's basic setting selection command through the user selection part 60.

Even if the automatic setting function is not selected so as not to perform the basic setting operation automatically at the initial power-on stage, the controller 40 may receive the basic setting selection command through the user selection part 60.

The controller 40 may control the OSD generator to generate and output the selection menu to receive the basic setting selection command from the user. Here, the OSD generator displays the selection menu with a default language set when the broadcast receiving apparatus is manufactured or released on to the market.

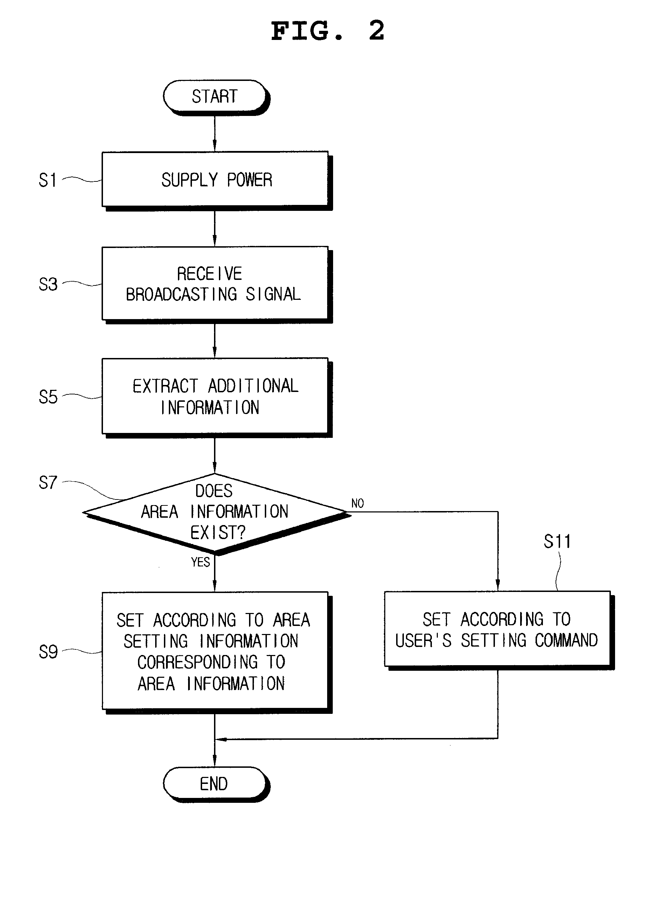

Hereinafter, the operation of the broadcast receiving apparatus according to the present invention will be described in detail with reference to Figure 2.

As shown in Figure 2, when power is supplied (S1), the controller 40 controls the tuner of the signal receiver 10 to tune a channel and accordingly receive the broadcast signal (S3).

When the broadcast signal is received through the initially-tuned channel, the controller 40 extracts the additional information from the received broadcast signal (S5), and determines whether the extracted additional information contains the area or region information corresponding to the reception area of the broadcast signal (S7).

If the area information is included in the additional information, the controller 40 controls the setter 30 to perform the basic setting operation according to the area setting information corresponding to the area information (S9).

If the area information is the country code, the area setting information may comprise a language, time, a frequency band, channel information, or other information known in the art corresponding to the country code.

If the area information is not included in the additional information at operation S7, the controller 40 controls the setter 30 to perform the setting operation after receiving the language, time, the frequency band and the channel information upon receipt of a user's setting command according to the general setting method (S11).

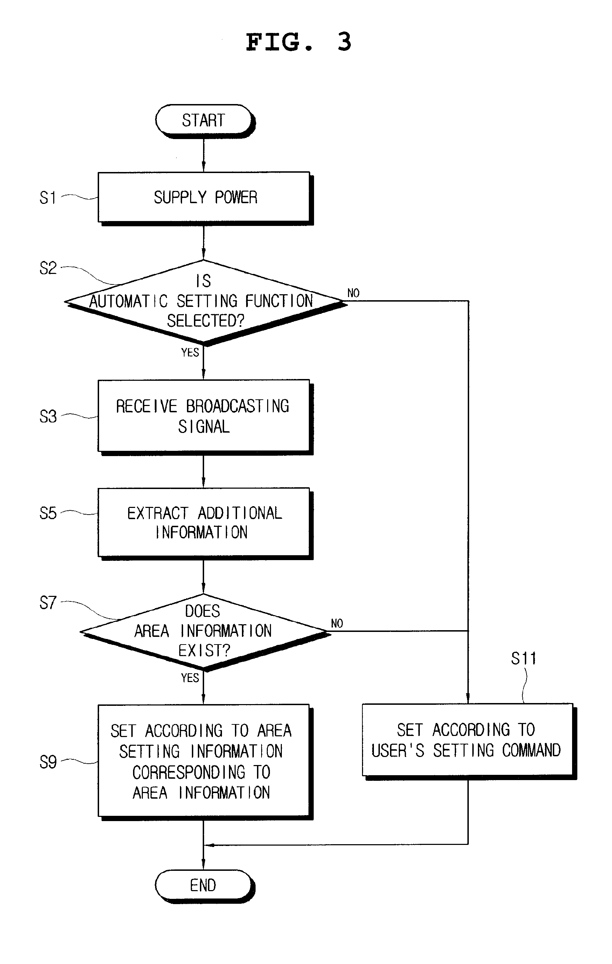

Figure 3 illustrates the operation of a broadcast receiving apparatus according to another exemplary embodiment of the present information.

When power is initially supplied to the broadcast receiving apparatus (S1), a controller 40 determines whether an automatic setting function is selected (S2). If it is determined that the automatic setting function is selected, the controller 40 tunes a channel through a tuner of a signal receiver 10 to receive a broadcast signal (S3).

If the broadcast signal is received through the initially-tuned channel, the controller 40 extracts additional information from the received broadcast signal (S5), and determines whether area information corresponding to a reception area of the broadcast signal exist in the extracted additional information (S7).

If the area information is included in the additional information, the controller 40 controls the setter 30 to perform the basic setting operation according to the area setting information corresponding to the area information (S9).

If it is determined at operation S2 that the automatic setting function is not selected, the controller 40 controls the setter 30 to perform the basic setting operation according to a user's command (S11).

The broadcast receiving apparatus according to the present invention may automatically perform the basic setting operation according to the country code of the reception area when powered on initially.

The basic setting may be automatically changed according to the country code of the received SI in places where the area information such as the country code is different.

As described above, the present invention provides a broadcast receiving apparatus which automatically sets a country, a language, time, other information known in the art corresponding to a reception area by using area information included in a broadcast signal received when power is initially supplied, and a control method thereof.

Thus, a user may minimize menu selections and perform a basic setting operation of the broadcast receiving apparatus without difficulty.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. A broadcast receiving apparatus comprising:
a signal receiver for receiving a broadcast signal;
means for extracting reception area information from a received broadcast signal; and
means for configuring the apparatus to operate in accordance with the extracted reception area information.

2. A broadcast receiving apparatus according to claim 1, wherein:
the extracting means comprises a demultiplexer which extracts ancillary information from the broadcast signal; and
the configuring means comprises setting means for performing a basic setting operation to process the broadcast signal; and further comprising:
storage means for storing area setting information corresponding to the reception area information; and
a controller for controlling the setting means to perform the basic setting operation based on the area setting information stored in the storage means, corresponding to the reception area information, if the reception area information is included in the ancillary information of the broadcast signal received through the signal receiver when power is supplied.

3. A broadcast receiving apparatus according to claim 2, wherein the controller is arranged to determine whether the reception area information is included in the ancillary information of the received broadcast signal if power is supplied and an automatic setting function is selected.

4. A broadcast receiving apparatus according to claim 2 or 3, wherein the area setting information comprises at least one of a language font or character set corresponding to a language of the reception area, time, a frequency band and channel information.

5. A broadcast receiving apparatus according to any one of claims 2 to 4, further comprising a user selection part, wherein
the controller is arranged to control the setting means to perform the basic setting operation based on a setting command input through the user selection part if the automatic setting function is not selected.

6. A broadcast receiving apparatus according to claim 5, wherein the controller is arranged to control the setting means to perform the basic setting operation based on the setting command input through the user selection part if the reception area information is not included in the ancillary information.

7. A method of configuring a broadcast receiving apparatus, the method comprising:
receiving a broadcast signal;
extracting reception area information from the received broadcast signal; and
configuring the apparatus to operate in accordance with the extracted reception area information.

8. A method according to claim 7, further comprising:
receiving a broadcast signal when power is supplied;
extracting ancillary information from the received broadcast signal; and
determining whether the reception area information is included in the extracted ancillary information, wherein configuring the apparatus comprises:
performing a basic setting operation to process the broadcast signal based on area setting information corresponding to the reception area information, the area setting information being stored corresponding to the area information of the reception area.

9. A method according to claim 8, further comprising determining whether an automatic setting function is selected if power is supplied.

10. A method according to claim 8 or 9, wherein the area setting information comprises at least one of a language font or character set corresponding to a language of the reception area, time, a frequency band and channel information.

11. A method according to claim 8, 9 or 10, further comprising performing the basic setting operation based on a setting command from a user if the automatic setting function is not selected.

12. A method according to claim 11, further comprising performing the basic setting operation based on the setting command from a user if the reception area information is not included in the ancillary information.
